(19) Europäisches Patentamt
European Patent Office
Office européen des brevets

(11) **EP 3 555 511 B1**

(12) **EUROPEAN PATENT SPECIFICATION**

(45) Date of publication and mention
of the grant of the patent:
**23.02.2022 Bulletin 2022/08**

(21) Application number: **17832554.4**

(22) Date of filing: **07.12.2017**

(51) International Patent Classification (IPC):
*H02G 15/007* (2006.01)   *H02G 15/14* (2006.01)
*H02G 15/076* (2006.01)   *F16L 9/19* (2006.01)
*F16L 39/00* (2006.01)    *F16L 33/00* (2006.01)
*F16L 13/11* (2006.01)    *F16L 11/12* (2006.01)
*E21B 33/035* (2006.01)

(52) Cooperative Patent Classification (CPC):
**F16L 33/00; F16L 9/20; F16L 11/12; F16L 13/11;
F16L 39/00; H02G 15/007;** H02G 15/076;
H02G 15/14

(86) International application number:
**PCT/IB2017/001667**

(87) International publication number:
**WO 2018/109559 (21.06.2018 Gazette 2018/25)**

(54) **SHAPE MEMORY ANCHOR FOR UMBILICAL TERMINATION**

FORMGEDÄCHTNISANKER FÜR ABSCHLUSS EINES VERSORGUNGSKABELS

ANCRAGE À MÉMOIRE DE FORME POUR TERMINAISON POUR LIAISON OMBILICALE

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **16.12.2016 GB 201621513**

(43) Date of publication of application:
**23.10.2019 Bulletin 2019/43**

(73) Proprietor: **Technip France
92400 Courbevoie (FR)**

(72) Inventors:
• **DOBSON, Alan
Newcastle Upon Tyne
Tyne and Wear NE7 7QT (GB)**
• **PROBYN, Ian Nicholas
Newcastle Upon Tyne
Tyne and Wear NE7 7AA (GB)**
• **AN, Xiaoxue
Bedlington
Tyne and Wear NE22 5ET (GB)**
• **FLETCHER-WOODS, Jamie
Newcastle Upon Tyne
Tyne and Wear NE20 9LL (GB)**
• **DEQUIN, Thierry
Houston, Texas 77055 (US)**
• **ZERKUS, Michael
Seabrook, Texas 77586 (US)**

(74) Representative: **Murgitroyd & Company
Murgitroyd House
165-169 Scotland Street
Glasgow G5 8PL (GB)**

(56) References cited:
**WO-A1-2008/037962    FR-A1- 3 000 170**

## Description

This invention relates to a method of making a termination assembly for an umbilical.

## Background

An umbilical is a type of elongate element used in subsea structures in the oil and gas industry. They are typically used for transmitting power, signals and/or fluids (for example, for fluid injection, hydraulic power, gas release, etc.) to and from a subsea installation. Thus, an umbilical generally comprises a group of one or more types of elongate active elements such as electrical cables, optical fibre cables, steel tubes and/or hoses. These active elements may be cabled together for flexibility, over-sheathed and, when applicable, armoured for mechanical strength. API (American Petroleum Institute) 17E "Specification for Subsea Umbilicals", fourth edition, April 2011, provides standards for the design and manufacture of such umbilicals.

The point at which an umbilical is connected to another component, for example a subsea installation, is known as an umbilical termination. In use, the axial tensile loads acting on an umbilical can be very high. Thus, a known problem is that the joint between the umbilical termination and the umbilical need to have sufficient strength to withstand such great axial loads acting thereon.

WO 2008/037962 describes one attempt to solve this problem. This document relates to an umbilical termination assembly wherein all or most of the elongate active elements comprising the umbilical are steel tubes. The umbilical termination assembly comprises a cavity through which the steel tubes pass, the cavity being filled with a filler material. In order to help anchor the steel tubes in the filler material, and to assist in resisting tensile loads, one or more areas of increased localised diameter (in the form of washers, sleeves or collars) are provided on the outer surface of the steel tubes.

A similar system involving the use of such areas of increased localised diameter is described in WO 2009/007728. In this document, the filler materials additionally comprise spheroidal beads.

A disadvantage of the umbilical termination assemblies described above is that the washers, sleeves or collars need to be welded onto the steel tubes. The welding step, and subsequent welding qualification, is time consuming. In addition the heat generated can damage the tubes. The welding process normally has to be carried out in a restricted space, meaning that the work needs to be carried out by a highly skilled welder. And also, due to the limited space it is difficult to control weld geometry. The resulting weld is also more sensitive to environment induced cracking, such as hydrogen induced stress cracking (HISC), due to the introduction of residual stress and the lack of a uniform microstructure in the weld. This invention seeks to overcome the problems caused by welding the washer, sleeve or collar onto the steel tube.

## Statement of invention

According to the invention, there is provided a method of making a termination assembly for an umbilical, wherein one or more tubes extend from the umbilical, the method comprising inserting the one or more tubes extending from the umbilical into a chamber within the termination assembly either before or after steps (a)-(c) below, the method comprising the steps of:

(a) providing an anchor for mounting onto one of the tubes, the anchor comprising a shape memory material in a second phase and comprising an aperture which is in a second shape which the tube can pass through,
(b) sliding the anchor onto the tube by passing the tube through the aperture,
(c) allowing the shape memory material to undergo a phase change in which at least some of the second phase converts to a first phase such that the aperture returns towards a first shape which the tube cannot pass through, the anchor thereby gripping the tube, and
(d) adding a filler material to the chamber.

## Brief description of the drawings

This invention will be further described by reference to the following Figures which are not intended to limit the scope of the invention claimed, in which:

**Figure 1** shows a longitudinal cross-sectional view of a termination assembly for an umbilical according to one embodiment of the invention,
**Figures 2(a)-(b)** show a transverse cross-sectional views of an anchor according to one embodiment of the invention prior to step (ii), and the tube onto which it is to be mounted,
**Figure 2(c)** shows a longitudinal cross-sectional view of Figures 2(a)-(b),
**Figures 3(a)-(b)** show a transverse cross-sectional views of the anchor of Figure 2 after step (iii), and the tube onto which it is to be mounted,
**Figure 3(c)** shows a longitudinal cross-sectional view of Figures 3(a)-(b),
**Figure 4** shows a transverse cross-sectional view of the anchor of Figures 2 and 3 after it has been mounted on the tube and after step (c),
**Figure 5(a)** shows a longitudinal cross-sectional view of an alternative embodiment of the invention in which several anchors are mounted onto a tube,
**Figure 5(b)** shows a longitudinal cross-sectional view of an alternative embodiment of the invention in which the anchor is a coil,
**Figure 6(a)** shows a longitudinal cross-sectional view of a further alternative embodiment of the invention in which the anchor comprises a steel retention collar sandwiched between two shape memory alloy collars, and

**Figures 6(b)-(c)** show longitudinal cross-sectional views of a further alternative embodiment of the invention where the anchor is formed as a single piece comprising a central disk sandwiched between two conical sections.

## Detailed description

It has been found by the inventors that the large change in shape that can be provided by shape memory materials is particularly useful when mounting an anchor on the tube of an umbilical. The use of such materials can avoid the need for welding and make the installation of the anchor onto the tube easier. In the context of the invention, shape memory materials are generally defined as materials which, on the basis of a reversible phase change, induced by a stimulus, can be deformed, and which then return to or towards their original shape when the stimulus ceases. The expression phase change is also known as phase transition. The shape memory material may be an alloy, a polymer, a foam or any shape memory material suitable for the present application. The stimulus may be a change in temperature (cooling, heating), or the application of a magnetic field, an electrical field or any other stimulus, provided that the stimulus leads to a phase change of the shape memory material and allows a change in shape of the shape memory material. For example, the shape memory material may be a shape memory alloy which can be cooled below a temperature of transformation Mf, deformed, and which then returns to or towards its original shape as its temperature increases above a temperature of transformation Af. The tubes of the umbilical are generally made of steel, more particularly duplex steel, even more particularly super duplex steel.

The anchor may comprise an aperture through which the at least one tube passes. The shape memory material may be chosen such that prior to delivering the stimulus it is in a first shape, that the stimulus can be delivered and the material deformed into a second shape which is different from the first shape, and that when the stimulus is ceased it returns to or towards the first shape. When the shape memory material is in the first shape, it may comprise an aperture having a first shape the umbilical tube cannot pass through. In particular, the aperture may have a first size which is too small for the tube to pass through. More particularly, the deformation into the second shape may comprise deforming the aperture to a second shape which the tube can pass through. In particular, the deformation may comprise expanding the aperture from a first size to a second size which the tube can pass through. More particularly, when the shape memory material stimulus is ceased, the shape/size of the aperture may return towards its first shape, or its first size, thereby gripping the tube.

In relation to the invention, the filler material may comprise any such material as is known in the art for filing a chamber/cavity through which umbilical tubing passes, and for example may be selected from the group consisting of epoxy resins and polyester resins. In some embodiments, the chamber is filled or substantially filled with the filler material. In some embodiments, the filler material may comprise additives such as sand or glass beads. These additives can, for example, lower the transition temperature of the filler material.

In some embodiments, the shape memory material is a shape memory alloy. More particularly the shape memory alloy may be a nickel-titanium alloy. A suitable alloy is Nitinol. The shape memory alloy may be chosen such that when it is at room temperature it is in a first shape, that it can be cooled (ie the stimulus) below room temperature and deformed into a second shape which is different from the first shape, and that as it returns to room temperature it returns to or towards the first shape. In particular, the shape memory alloy may be cooled to or below the temperature of transformation Mf which is generally below the lowest operating temperature range of the umbilical. When the shape memory alloy is in the first shape, it may comprise an aperture having a first shape the umbilical tube cannot pass through. In particular, the aperture may have a first size which is too small for the tube to pass through. More particularly, the deformation into the second shape may comprise deforming the aperture to a second shape which the tube can pass through. In particular, the deformation may comprise expanding the aperture from a first size to a second size which the tube can pass through. More particularly, when the shape memory alloy returns to room temperature the shape/size of the aperture may return towards its first shape, or its first size, thereby gripping the tube.

When the shape memory alloy is in the second shape, the shape memory alloy is in the second phase. When the shape memory alloy is in the first shape, the shape memory alloy is in the first phase.

In particular, when the shape memory alloy is in the first shape, or the aperture is in its first shape, it is in an austenitic phase. Preferably, the shape memory alloy is selected such that it converts from an austenitic phase to a martensitic phase at the temperature of transformation Mf which is preferably at a temperature below room temperature, more preferably at a temperature below the lowest operating temperature range of the umbilical. In particular, the shape memory alloy is deformed into the second shape, or the aperture expanded to a second shape, when it is in the martensitic phase. More particularly, the shape memory alloy then returns to or towards the first shape, or the aperture returns to or towards its first shape, when it converts back to the austenitic phase. Thus, in the termination assembly of the invention, the shape memory alloy is generally in the austenitic phase.

The anchor can have a variety of configurations. In particular, it may be formed such that when the material is in its second shape, or the aperture deformed to its second shape, the anchor can slide onto a tube, and that when the material is in (or has returned towards) its first shape, or the aperture is in (or has returned towards) its first shape, it grips the outer surface of the tube. In some embodiments, the anchor may be an annulus, such as a collar, washer or sleeve, a short tube, or a coil. One or more anchors can be mounted on the same tube. One or more anchors can be mounted on more than one tube. In this context, the surface of the anchor which, when the anchor is mounted on a tube, faces towards and/or contacts the tube is referred to as the inner surface. Similarly, the surface of the anchor which, when the anchor is mounted on a tube, faces away from the tube is referred to as the outer surface. Preferably, the surface of the anchor that grips the outer surface of the tubes (generally the inner surface of the anchor) is smooth. In this context, smooth it is to be understood be a roughness of less than $3.2\mu m$ ($125\mu in$). More particularly, the roughness of the surface of the anchor that grips the outer surface of the tubes may be calculated using the Root Mean Square (RMS) method (Rq) or the average method (Ra). The gripping of the anchor around the tube can thus be provided by friction and contact pressure around the tube. In some embodiments, the surface of the anchor that grips the outer surface of the tubes may comprise an indentation. When the anchor is an annulus (in particular, a collar, washer, sleeve or short tube), the indentation may be in the form of an annular groove on the inner surface of the anchor. The indentation can locally plastically deform the tube and assist the mechanical grip of the anchor around the tube.

In a particular embodiment, the anchor is in the form of a collar or disk. The collar may be formed entirely from a shape memory material, more particularly entirely from a shape memory alloy. In its first shape, the collar may be a generally circular tube. More particularly, the collar may have a central generally circular bore (ie the aperture referred to above). In its first shape, the collar may have an internal diameter of around 5-100mm, more particularly 10-45mm, even more particularly 10-30mm and even more particularly 10-20mm. In particular, in its first shape the collar comprises a wall having a thickness of 0.2-5mm, more particularly 0.5-2mm, even more particularly 0.6-1.6mm. In some embodiments, at least part of the outer surface of the collar is conical. In a particular embodiment, the collar may have a variable thickness and/or a variable internal diameter along its length. For example, the collar may comprise a thicker central section which is sandwiched between two thinner outer sections. The thicker central section may be in the form of a central disk. In some embodiments, there may be more than one thicker central section, each section separated by a thinner linking section. The thinner outer sections may be conical. In particular, their thickness may decrease as they extend away from the thicker central section.

In some embodiments, more than one anchor may be provided on a tube. In some embodiments, the anchor may comprise a non-shape memory material collar sandwiched between two shape memory material collars. More particularly, the anchor may comprise a non-shape memory alloy collar sandwiched between two shape memory alloy collars. The two shape memory material (for example, alloy) collars may be as described above. The non-shape memory material collar may be formed from steel. The non-shape memory material collar may comprise a central generally circular bore. In particular, the bore of the non-shape memory material collar may have a diameter which is larger than an outer diameter of the tube. More particularly, the bore of the non-shape memory material collar may have a diameter such it can be slid onto the tube.

The tube maximum and minimum tolerances are usually governed by ASTM A789 and API 17E. A typical tolerance for the tube's outer diameter is +/-0.13mm (0.05inch) on tubes with an outer diameter smaller than 38.1mm (1.5 inch), and +/-0.25mm (0.01inch) for larger diameter tubes.

There is a hoop stress $\sigma_r$ within the collar once it is mounted on the tube in the termination assembly. This hoop stress results from the strain resulting from the variation in the diameter (ie the size) of the bore (ie the aperture), and also from the mechanical properties of a shape memory alloy. Surprisingly, it has been found by the inventors the optimum hoop stress for the collar is between 500 MPa and 700 MPa. Such hoop stress within the collar allows to have a suitable gripping of the tube when the collar converts back to the austenitic phase.

As discussed below, the pressure applied by the collar to the tube is preferably between 70 MPa and 100 MPa. Such pressure can help to ensure an efficient anchoring of the collar around the tube without generating plastic deformation of the tube. In an alternative embodiment, the collar can plastically deform the tube. To this end, the inner surface of the collar may comprise an indentation as described above in order to locally plastically deform the tube and thus prevent damage along its length.

In relation to the method of making a termination assembly for an umbilical, the shape memory material may be as described above, and the anchor may be as described above. In some embodiments of the method, step (a) may comprise:

(i) providing an anchor for mounting onto one of the tubes, the anchor comprising a shape memory material in a first phase and comprising an aperture having a first shape which the tube cannot pass through,
(ii) delivering a stimulus to the anchor such that the shape memory material undergoes a phase change in which at least some of the first phase converts to a second phase, and
(iii) deforming the aperture to a second shape which the tube can pass through.

In particular, in step (i), the first shape may be a first size which is too small for the tube to pass through. More particularly, in step (iii) the deforming may comprise expanding the aperture to a second size which is large enough for the tube to pass through. The step (c) of allowing the shape memory material to undergo a phase change in which at least some of the second phase converts to a first phase such that the aperture returns towards its first shape may be the result of ceasing the stimulus either after step (ii), or before, during or after steps (iii) or (b). In a particular embodiment, the shape memory material is a shape memory alloy. In a further particular embodiment step (c) comprises increasing the temperature of the anchor above a temperature of transformation Af such that the shape memory alloy undergoes a phase change in which at least some of the second phase converts to the first phase and the aperture returns towards its first shape, the anchor thereby gripping the tube. In a further particular embodiment, step (ii) comprises cooling the anchor below the temperature of transformation Mf such that the shape memory alloy undergoes a phase change in which at least some of the first phase converts to the second phase. Preferably, above the temperature of transformation Af, the shape memory alloy undergoes a phase change in which at least 50%, preferably at least 80% and even more preferably substantially the entire second phase converts to the first phase. Preferably, below the temperature of transformation Mf the shape memory alloy undergoes a phase change in which at least 50%, preferably at least 80% and even more preferably substantially the entire first phase converts to the second phase.

When the aperture (or bore in the case of the anchor being a collar) is in its first size in step (i), it may have a diameter which is less than that of an outer diameter of the tube onto which it is to be mounted. In particular, in its first size the diameter of the aperture (or bore, $d1$) is 1-5% less than the outer diameter of the tube ($d0$), more particularly 2-4% less. Thus, $d1$ is generally between $d0$-0.05$d0$ and $d0$-0.01$d0$, more particularly between $d0$-0.04$d0$ and $d0$-0.02$d0$.

In step (ii), the anchor can be cooled below the temperature of transformation Mf. The cooling can be to a temperature below room temperature (ie between -40°C and 50°C), more particularly to a temperature of less than -100°C, for example using liquid nitrogen. In step (c) the anchor can be heated above the temperature of transformation Af. The heating can be to a temperature higher than room temperature. Such temperatures may correspond to the working temperature of the umbilical tubing during use, and may for example be from -10°C to 120°C, more particularly from -4°C to 90°C and even more particularly from 2°C to 55°C.

The temperature of transformation Mf and Af can be measured by Differential Scanning Calorimetry (DSC).

When the aperture (or bore in the case of the anchor being a collar) has been expanded to its second size in step (iii), for example by using a shaft, it may have a diameter which is greater than that of an outer diameter of the tube onto which it is to be mounted. In particularly, in its second size the diameter of the aperture (or bore, $d2$) is 1-6% greater than the outer diameter of the tube ($d0$). Thus, d2 is generally between $d0$+0.01$d0$ and $d0$+0.06$d0$. When the aperture is in its second size, the collar may be generally circular with the aperture being a central generally circular bore. In consequence the installation can be made easier as the clearance ratio between the outer diameter of the tube and the diameter d2 of the aperture (or bore) is particularly important.

As described above, in step (b) the (or each) anchor is then slid onto the tube onto which it is to be mounted. This step is generally carried out at room temperature, particularly if the shape memory material is a shape memory alloy and the stimulus is a change in temperature.

Once the (or each) anchor is in its final position on the tube, in step (c) the aperture returns towards its first shape or first size. If the shape memory material is a shape memory alloy and the stimulus is a change in temperature, the (or each) anchor is allowed to warm up to a temperature at which the aperture returns towards its first shape or first size as defined above. When the aperture returns towards its first size, this causes the diameter of the aperture (or bore) to reduce from $d2$ towards d1. As a result of this reduction in diameter, the anchor comes into contact with an outer surface of the tube. Since the aperture (or bore) is attempting to return to a diameter $d1$ which is less than the outer diameter $d0$ of the tube, it generally applies a pressure to the tube. This pressure leads to a reduction in the tube's outer diameter of around 0.2% to a reduced outer diameter ($d0'$). The diameter of the aperture (or bore) is therefore limited by the tube to an intermediate diameter ($d1'$), which is approximately equal to $d0'$. It is this pressure that retains the anchor on the tube. When the anchor is a collar, this results in a hoop stress $\sigma_r$ in the collar and a radial pressure $P_t$ exerted by the collar on the tube as defined above.

The clearance ratio between the outer diameter of the tube and the diameter of the aperture (or bore) ($d0$-$d1$/$d0$) defined above can generate a suitable contact pressure by the collar onto the tube as defined above. In addition, such clearance ratio results in a hoop stress as defined above which is almost constant and which can enable accurate control of the pressure applied by the collar on the tube.

As described above, the method comprises the step (d) of adding a filler material to the chamber. In some embodiments, step (d) comprises substantially filling the chamber with the filler material. The use of a filler material helps to secure the tube in the chamber. This step may, for example, be carried out under pressure. The filler material is then allowed to cure within the chamber. The filler material may be as described above.

The method according to the invention can, for example, be performed onshore at production facilities during manufacturing operations or offshore during installation.

The invention will now be described in more detail below, in relation to specific examples in which the anchor is a shape memory alloy collar or coil.

<u>Example of Pressure $P_t$ exerted by the collar on the tube</u>

Regarding the pressure $P_t$ applied to the tube, the maximum and minimum pressures that should be applied by the collar to the tube should be determined on the one hand by the mechanical properties of the tube and on the other hand by the axial load that the termination assembly is subjected to.

More particularly, the material used for the tubes may, for example, be a super duplex material, generally a super duplex steel. For example, a duplex stainless steel comprises a mixture of austenitic and ferritic duplex phase structure. A super duplex stainless steel has a Pitting Resistance Equivalent Number (PREN) of >41, where PREN = %Cr + 3.3x(%Mo + 0.5x%W) + 16x%N. Usually, super duplex grades have 25% or more chromium. For such a material, the Yield Strength $\sigma_y$ is between 500 MPa and 750 MPa.

To try and keep the deformation of the tube in the elastic domain the pressure $P_t$ should not exceed around 100 MPa. The minimum pressure $P_t$ to be applied to the tube in order to retain the collar on the tube depends upon the axial load F that the tube will have to withstand during operation. The collar in the termination assembly may be strong enough to withstand this axial load. This load in mainly transferred to the termination though the collar and through the locking effect of the collar in the filler material. For example, for axial load of around 17kN the pressure $P_t$ should be at least around 70 MPa.

<u>Example of Thickness of the collar</u>

In relation to the thickness of the collar (ie (outer diameter - internal diameter) divided by 2), the inventors carried out several tests to assess the effect of the thickness of the collar (t) on the pressure $P_t$ applied to the tube by the collar depending on the particular hoop stress $\sigma_r$ defined above within the collar for shape memory materials. The results seemed to validate Lame's equation which sets the relation between the hoop stress and the pressure as follows:

$$\sigma_r = \frac{P_t D'}{2t}$$

It can be deduced that the thickness of the collar acts on the pressure $P_t$ applied by the collar onto the tube as follows:

$$t = \frac{P_t D'}{2\sigma_r}$$

where t is the thickness of the collar, D' is the mean diameter of the collar once mounted on the tube, and $\sigma_r$ is the circumferential stress (hoop stress) in the collar.

The upper and lower limits of the thickness of the collar depend upon the pressure that should be applied to the tube and the allowable compressive strength that the filler material is able to withstand. It has been found by the inventors that the thickness of the collar should be less than 25mm, preferably between 0.5mm and 10mm, more preferably between 0.5mm and 2mm, and preferably between 0.7mm and 1.6mm. Above such thickness, the pressure $P_t$ could be above the pressure limit and may therefore induce plastic deformation to the tube. Below 0.5mm, the anchoring of the collar in the filler material may not be enough to lock the collar into the filler material.

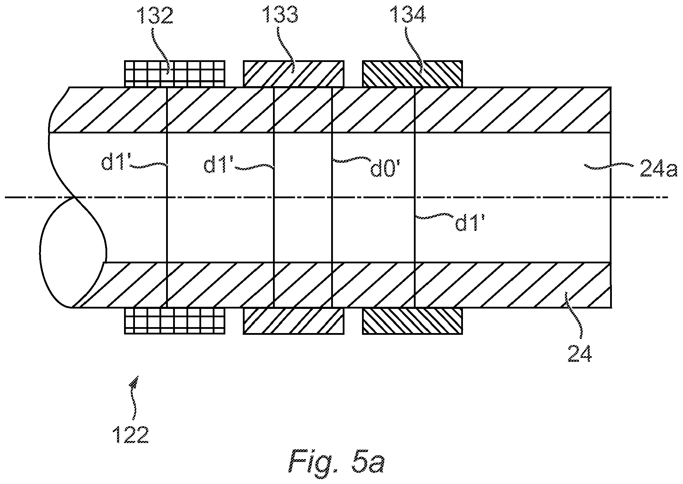

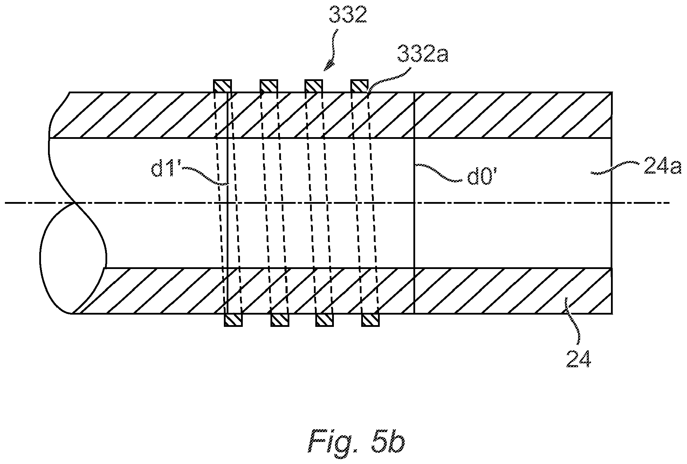

As shown above, the thickness of the collar has to be determined in order to limit plastic deformation of the tube and limit damage to the filler material, while providing an efficient anchoring in the filler material. In this context, a solution could comprise providing a collar with a suitable thickness to prevent damage to the tube and increasing the overall area of the collar to achieve the anchoring of the collar into the filler material. To this end, in some embodiments of the termination assembly several collars (at least two, depending on the thickness of each collar) may be mounted on the tube. The axial load will thus be distributed between them. An example if this embodiment is shown in Figure 5a and 5b, which is described in more detail below.

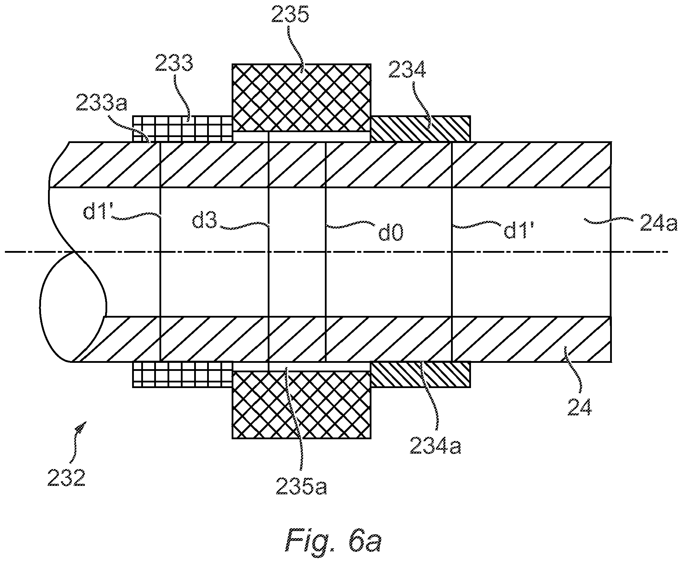

An alternative embodiment to provide efficient anchoring of the collar in the filler material involves increasing the thickness of the collar. As set out above, a collar having too great a thickness can induce plastic deformation in the tube. One way of achieving this is for the anchor to comprise three collars. Consequently, according to this embodiment, a central collar having a thickness greater than the collar thickness limit defined above may be mounted on the tube in order to achieve the locking effect into the filler material. In order to try and prevent any damage to the tube, the diameter d3 of the bore of the central collar may be higher than the diameter *d0'* of the tube. Consequently, the central collar does not apply pressure to the tube. The central collar is maintained on the tube by being sandwiched between two shape memory collars as described herein. Preferably, the thickness of the central collar is greater than the thickness of the shape memory collars. Since the internal diameter d3 of the collar is much higher than the outer diameter *d0'* of the tube its installation is made easier and collar can be made of a non-shape memory material, for example steel. The two shape memory collars are mounted as described above, and when their bore returns to its first size they grip the tube and thereby maintain the central steel collar in position on the tube. An example of this embodiment is shown in Figure 6a, which is described in more detail below.

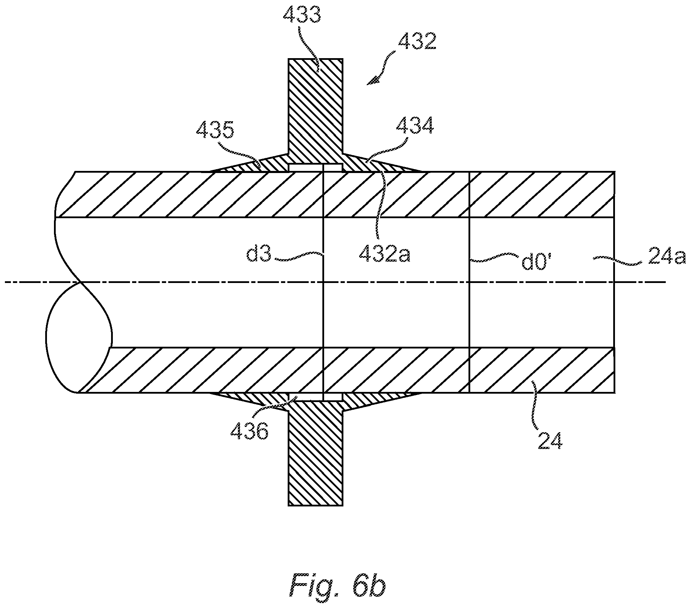

To provide easier installation of the collar around the tube, a variant may consist in a single collar having two side sections which grip the tube and a central disk which provides the locking effect in the filler material. Thus, the two side sections may have an internal diameter d0' as described above and the central disk may have an internal diameter d3 higher than the outer diameter d0' of the tube and a thickness higher than the thickness of the two side sections. The side sections may have a conical cross-section such that their thickness decreases as they extend away from the central disk. An example of this embodiment is shown in Figure 6b, which is described in more detail below.

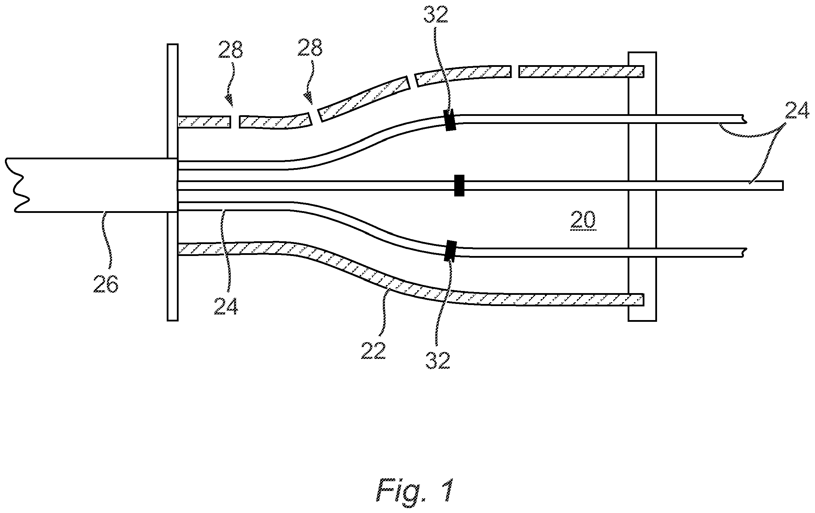

Figure 1 is a cross-sectional view of a termination assembly 22 for an umbilical 26. Three steel tubes 24 extend from the umbilical 26, into and through chamber 20. At the top of the termination assembly 22 there are provided four filling ports 28. The filler material (not shown) can be injected into the chamber 20 through the filling ports 28.

An anchor 32 in the form of a collar is mounted on each of the tubes 24 in order to secure each tube 24 in the filler material. The anchor 32 is made from a shape memory material as defined above, for example a nickel-titanium alloy.

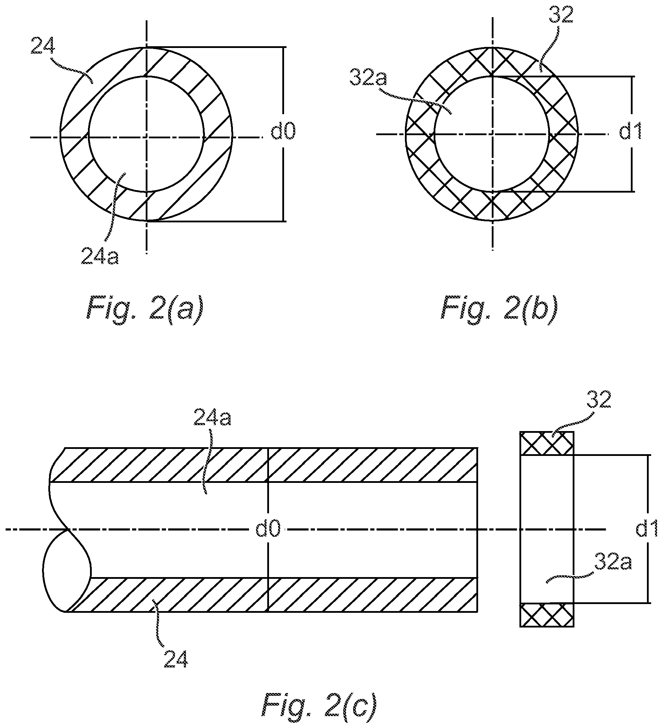

Figure 2(a) shows a cross-sectional view through one of the tubes 24 of Figure 1 prior to the anchor 32 being mounted on it. As shown, the tube 24 has a substantially circular cross-section and a substantially circular bore 24a. The tube 24 has an outer diameter d0.

Figure 2(b) then shows a cross-sectional view through the anchor 32 which is to be mounted on tube 24. The anchor 32 also has a substantially circular cross-section and a substantially circular bore 32a. The bore 32a has a diameter d1.

In Figures 2(a)-(c), the components are depicted in the form that they would be in at room temperature. The shape memory alloy from which the anchor 32 is made is in an austenitic phase at room temperature. At this temperature, the diameter d1 of bore 32a is smaller than the outer diameter d0 of the tube 24 and thus the anchor 32 cannot be slid onto the tube 24 in order to mount it thereon. This difference in diameter is depicted in Figure 2(c), which shows a lengthwise cross-sectional view of the tube 24 and the anchor 32. Diameter d1 is general around 2-4% less than diameter d0.

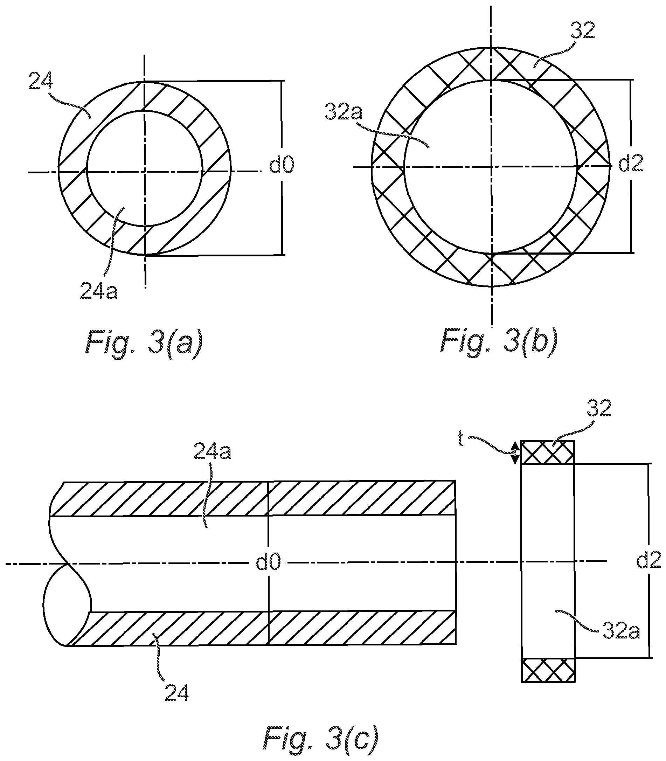

The shape memory alloy from which the anchor 32 is made has a temperature of transformation Mf below room temperature at which the austenitic phase has converted to the martensitic phase. Figures 3(a)-(c) depict the same views as Figures 2(a)-(c), except that the anchor 32 has been cooled by immersion in liquid nitrogen to a temperature below the temperature of transformation Mf. In addition, once cooled, the anchor 32 has been expanded (ie deformed) such that the diameter of the bore 32a has been increased to a diameter d2. For example, a shaft with a suitable outer diameter may be inserted into the bore 32a to increase its diameter to d2.

As a result of the expansion of anchor 32, diameter d2 of bore 32a is larger than outer diameter d0 of tube 24. Thus, the anchor 32 can now be slid onto the tube 24 into order to mount it thereon. Diameter d2 is general around 1-6% greater than diameter d0.

The anchor 32 is then removed from the liquid nitrogen and slid over the tube 24. This would be by moving the anchor 32 to the left from the position shown in Figure 3(c). This step can be carried out at room temperature because the anchor does not have time to warm up above the Af temperature and thus the shape memory alloy remains in the martensitic phase.

The anchor 32 is moved to its final position mounted on the tube 24 and it is allowed to continue to warm up. The temperature of the anchor 32 increases above the temperature of transformation Af, at which point the shape memory alloy converts back to the initial austenitic phase and attempts to recover its initial shape. In particular, the anchor 32 returns towards having a bore diameter d1 which is less than the outer diameter d0 of the tube 24. Thus, the diameter of bore 32a decreases until it comes into contact with the outer surface of tube 24. In this way, the anchor 32 grips the tube 24.

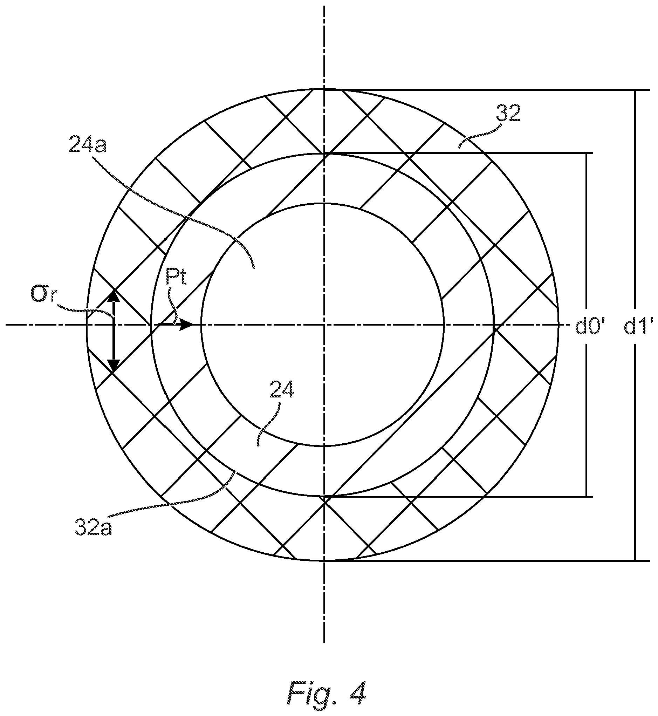

Figure 4 depicts a cross-sectional view of the anchor 32 and tube 24 in this position, ie when the bore 32a of anchor 32 is in contact with the outer surface of tube 24. As a result of the pressure applied by the shrinking bore 32a of anchor 32, the outer diameter d0 of tube 24 is very slightly reduced (by around 0.2%) to d0'. Due to the presence of tube 24, the diameter of bore 32a does not reach its original diameter d1 and instead is held at a larger diameter d1' by tube 24. This results in a hoop stress $\sigma_r$ in the anchor 32 and a radial pressure Pt exerted by the anchor 32 on the tube 24.

Figure 5a shows an alternative embodiment of the invention in which the termination assembly 122 comprises multiple anchors (in this case, three) 132, 133, 134 mounted on tube 24. Each of the anchors 132, 133, 134 is substantially identical to the anchor 32 of Figures 1-4, and they are mounted as described above. The view of Figure 5 is a lengthwise cross-section along tube 24. An advantage of using several anchors 132, 133, 134 is that the axial load anchoring them in the filler material (eg an epoxy resin) is spread across each of them.

To enhance the anchoring of the anchor into the filler material while keeping an easy installation and manufacturing process, in an alternative embodiment the anchor may be a coil 332 as shown in Figure 5b. The coil 332 has a central bore 332a which is expanded in the same way as described above in Figures 3(a)-(c) in relation to the bore 32a of anchor 32. The coil 332 is then mounted on the tube 24 and allowed to continue to warm up, resulting in the same phase changes described above. The coil 332 is, for example, formed of several spaced turns which create several load bearing surfaces.

As is the case in Figure 4, d0' represents the outer diameter of the tube 24 when slightly reduced as a result of the shrinking bore 332a of coil 332. Similarly, the diameter of bore 332a does not reach its original diameter d1, but is instead held at a larger diameter d1' by tube 24.

The cross-section of material (eg a shape memory alloy wire) used to make the coil 332 of Figure 5b is for example rectangular. In an alternative embodiment, the cross-section of material used to make the coil 332 may be circular. In a further alternative, the coil 332 may be formed of several contiguous turns to limit stress concentration on the tube 24 (not shown in Figure 5b).

Figure 6a shows a similar cross-sectional view to Figure 5 of a further alternative embodiment of the invention. The anchor, indicated generally as 232, in Figure 6a comprises three component parts. There are two substantially identical shape memory alloy collars 233, 234 mounted on tube 24. The two shape memory alloy collars 233, 234 may alternatively have a conical outer surface in order to better control contact pressure applied to the tube. The conical shape may be such that when mounted on the tube 24 the thickness of the two shape memory alloy collars 233, 234 increases towards steel retention collar 235. In between the collars 233, 234 is sandwiched steel retention collar 235. Shape memory alloy collars 233, 234 are substantially identical to the anchor 32 of Figures 1-4. As shown in Figure 6a, the bores 233a, 234a, of collars 233, 234 respectively, do not reach their original diameter d1 and instead are held at a larger diameter d1' by tube 24.

Steel retention collar 235 has an internal bore 235a with a diameter d3 which is larger than the outer diameter d0' of tube 24 and generally larger that the diameter d1' of the bores 233a, 234a of shape memory alloy collars 233, 234. Thus, for example, in the arrangement shown in Figure 6a, steel retention collar 235 is mounted on the tube 24 with a clearance ratio. The diameter d3 is selected such that it is less than combination of the outer diameter d0' of the tube 24 plus the thickness t of the shape memory alloy collars 233, 234. This ensures that the steel retention collar 235 is retained between the shape memory alloy collars 233, 234.

To install the anchor 232 of Figure 6a, one of the shape memory alloy collars 233, 234 is slid on to the tube 24 after having been cooled and expanded in the same way as described above in relation to Figures 3(a)-(c). The steel retention collar 235 is then slid onto the tube 24. Finally, the second shape memory alloy collar 233, 234 is slid onto the tube 24 such that the steel retention collar 235 is sandwiched between and abuts each of the two shape memory alloy collars 233, 234. The shape memory alloy collars 233, 234 then warm up as described above in relation to Figures 3(a)-(c) such that they grip the tube 24.

Alternatively, and as shown in Figure 6b, the anchor may be formed as a single piece 432 comprising a central disk 433 sandwiched between two conical sections 434, 435. Compared to the collar of Figures 1-4, in this embodiment the central disk 433 protrudes further away from tube 24 in a direction perpendicular to tube 24. In addition, at the inner end of central disk 433 (ie the part closest to tube 24), conical sections 434, 435 extend away from central disk 433 in a direction substantially parallel to the major axis of tube 24. The thickness of conical sections 434, 435 decreases as they extend away from central disk 433. Anchor 432 has an internal bore 432a comprising annular groove 436 which is a similar width to, and generally in line with, central disk 433. In this way, the anchor 432 provides two side parts (conical sections 434, 435) which grip the tube 24 and a central part (central disk 433) which provides the locking effect into the filler material. The groove 436 may be machined in the central part such that it has an internal diameter d3 which is higher than the outer diameter d0' of the tube 24 and consequently the central disk 433 does not apply pressure on the tube 24. The conical shape of the two sections 434, 435 assists in controlling the contact pressure applied to tube 24. Preferably, the thickness of the central disk 433 is greater than the thickness of the two conical sections 434, 435 in order to increase the locking effect of the anchor into the filler material.

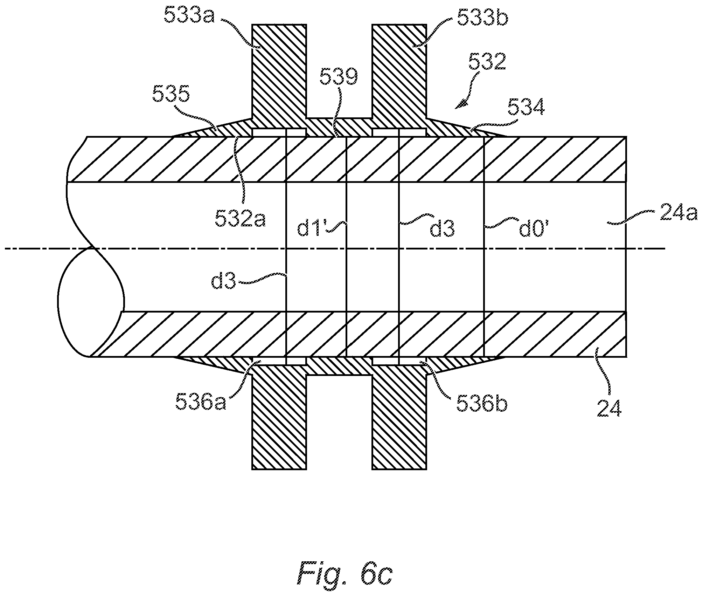

A further embodiment of the anchor 432 is shown in Figure 6c. The anchor 532 in Figure 6(c) is similar to the anchor 432 of Figure 6(b), except that it comprises two central discs 533a, 533b separated by annular link 539. On the opposite side of central discs 533a, 533b are provided conical sections 534, 535 which are substantially identical to those of Figure 6(b). Similarly, anchor 532 has annular bore 532a comprising two annular grooves 536a, 536b which is a similar width to, and generally in line with, central discs 533a, 533b. The annular grooves 536a, 536b provide an internal diameter d3 which is larger than outer diameter d0' of tube 24. In this way, anchor 532 may provide several load bearing surfaces to increase the locking effect of the anchor 532 into the filler material. Between the central discs 533a, 533b, the annular link 539 has an internal diameter d1' which assists in gripping the tube 24. Alternatively, the annular link 539 part may have an internal diameter greater than the outer diameter d0' of the tube and the gripping of the tube 24 is thus ensured by the conical sections 524, 535.

## Claims

1. A method of making a termination assembly (22, 122) for an umbilical (26), wherein one or more tubes (24) extend from the umbilical (26), the method comprising inserting the one or more tubes (24) extending from the umbilical (26) into a chamber (20) within the termination assembly (22, 122) either before or after steps (a)-(c) below, the method comprising the steps of:

(a) providing an anchor (32, 132, 133, 134) for mounting onto one of the tubes (24), the anchor (32, 132, 133, 134) comprising a shape memory material in a second phase and comprising an aperture which is in a second shape which the tube (24) can pass through,

(b) sliding the anchor (32, 132, 133, 134) onto the tube (24) by passing the tube (24) through the aperture,

(c) allowing the shape memory material to undergo a phase change in which at least some of the second phase converts to a first phase such that the aperture returns towards a first shape which the tube (24) cannot pass through, the anchor (32, 132, 133, 134) thereby gripping the tube (24), and

(d) adding a filler material to the chamber (20).

2. A method as claimed in claim 1 wherein the shape memory material is a shape memory alloy.

3. A method as claimed in claim 2 wherein step (c) comprises increasing the temperature of the anchor (32, 132, 133, 134) above a temperature of transformation Af such that the shape memory alloy undergoes a phase change in which at least some of the second phase converts to the first phase and the aperture returns towards its first shape, the anchor (32, 132, 133, 134) thereby gripping the tube (24).

4. A method as claimed in any of claims 1-3, wherein step (a) comprises:

(i) providing an anchor (32, 132, 133, 134) for mounting onto one of the tubes (24), the anchor (32, 132, 133, 134) comprising a shape memory material in the first phase and comprising an aperture having a first shape which the tube (24) cannot pass through,

(ii) delivering a stimulus to the anchor (32, 132, 133, 134) such that the shape memory material undergoes a phase change in which at least some of the first phase converts to the second phase, and

(iii) deforming the aperture to a second shape which the tube (24) can pass through.

5. A method as claimed in claim 4, wherein step (ii) comprises cooling the anchor (32, 132, 133, 134) below a temperature of transformation Mf such that the shape memory material undergoes a phase change in which at least some of the first phase converts to the second phase.

6. A method as claimed in either claim 4 or claim 5, wherein in step (i) the first shape is a first size which is too small for the tube (24) to pass through, and step (iii) comprises expanding the aperture to a second size which is large enough for the tube (24) to pass through.

7. A method as claimed in any one of claims 1-6, wherein the anchor (32, 132, 133, 134) is in the form of collar comprising a generally circular tube with a central generally circular bore (32a).

8. A method as claimed in claim 7, wherein in the first shape the internal diameter of the collar is 10mm-45mm and the collar comprises a wall having a thickness of 0.5mm-2mm.

9. A method as claimed in either claim 7 or claim 8, wherein the bore (32a) has a diameter (d1) which in the first shape is 2-4% less than an outer diameter (d0) of the tube (24) onto which the collar is to be mounted.

10. A method as claimed in any one of claims 7-9, wherein the bore (32a) has a diameter (d2) which in the second shape is 1-6% greater than an outer diameter (d0) of the tube (24) onto which the collar is to be mounted.

**Patentansprüche**

1. Ein Verfahren zum Herstellen einer Abschlussanordnung (22, 122) für ein Versorgungskabel (26), wobei sich eine oder mehrere Röhren (24) von dem Versorgungskabel (26) erstrecken, wobei das Verfahren das Einführen der einen oder der mehreren Röhren (24), die sich von dem Versorgungskabel (26) erstrecken, in eine Kammer (20) innerhalb der Abschlussanordnung (22, 122) entweder vor oder nach Schritten (a)-(c) unten beinhaltet, wobei das Verfahren die folgenden Schritte beinhaltet:

(a) Bereitstellen eines Ankers (32, 132, 133, 134) zum Montieren auf eine der Röhren (24), wobei der Anker (32, 132, 133, 134) ein Formgedächtnismaterial in einer zweiten Phase beinhaltet und eine Öffnung beinhaltet, die eine zweite Form aufweist, durch die die Röhre (24) hindurchgehen kann,

(b) Schieben des Ankers (32, 132, 133, 134) auf die Röhre (24) durch Durchführen der Röhre (24) durch die Öffnung,

(c) Ermöglichen, dass das Formgedächtnismaterial eine Phasenänderung durchläuft, in der sich mindestens ein Teil der zweiten Phase in eine erste Phase wandelt, sodass die Öffnung in Richtung einer ersten Form zurückkehrt, durch die die Röhre (24) nicht hindurchgehen kann, wodurch der Anker (32, 132, 133, 134) die Röhre (24) greift, und

(d) Hinzufügen eines Füllstoffs in die Kammer (20).

**2.** Verfahren gemäß Anspruch 1, wobei das Formgedächtnismaterial eine Formgedächtnislegierung ist.

**3.** Verfahren gemäß Anspruch 2, wobei Schritt (c) das Erhöhen der Temperatur des Ankers (32, 132, 133, 134) über eine Transformationstemperatur Af beinhaltet, sodass die Formgedächtnislegierung eine Phasenänderung durchläuft, in der mindestens ein Teil der zweiten Phase in die erste Phase gewandelt wird und die Öffnung in Richtung ihrer ersten Form zurückkehrt, wodurch der Anker (32, 132, 133, 134) die Röhre (24) greift.

**4.** Verfahren gemäß einem der Ansprüche 1-3, wobei Schritt (a) Folgendes beinhaltet:

(i) Bereitstellen eines Ankers (32, 132, 133, 134) zum Montieren auf eine der Röhren (24), wobei der Anker (32, 132, 133, 134) ein Formgedächtnismaterial in der ersten Phase beinhaltet und eine Öffnung beinhaltet, die eine erste Form aufweist, durch die die Röhre (24) nicht hindurchgehen kann,

(ii) Aufbringen eines Reizes auf den Anker (32, 132, 133, 134), sodass das Formgedächtnismaterial eine Phasenänderung durchläuft, in der mindestens ein Teil der ersten Phase in die zweite Phase gewandelt wird, und

(iii) Verformen der Öffnung in eine zweite Form, durch die die Röhre (24) hindurchgehen kann.

**5.** Verfahren gemäß Anspruch 4, wobei Schritt (ii) das Abkühlen des Ankers (32, 132, 133, 134) unter eine Transformationstemperatur Mf beinhaltet, sodass das Formgedächtnismaterial eine Phasenänderung durchläuft, in der mindestens ein Teil der ersten Phase in die zweite Phase gewandelt wird.

**6.** Verfahren gemäß entweder Anspruch 4 oder Anspruch 5, wobei in Schritt (i) die erste Form eine erste Größe aufweist, die zu klein ist, dass die Röhre (24) hindurchgehen kann, und Schritt (iii) das Weiten der Öffnung auf eine zweite Größe beinhaltet, die groß genug ist, dass die Röhre (24) hindurchgehen kann.

**7.** Verfahren gemäß einem der Ansprüche 1-6, wobei der Anker (32, 132, 133, 134) die Gestalt einer Manschette aufweist, die eine im Allgemeinen kreisförmige Röhre mit einer zentralen im Allgemeinen kreisförmigen Bohrung (32a) beinhaltet.

**8.** Verfahren gemäß Anspruch 7, wobei der Innendurchmesser der Manschette in der ersten Form 10-45 mm beträgt und die Manschette eine Wand beinhaltet, die eine Dicke von 0,5-2 mm aufweist.

**9.** Verfahren gemäß entweder Anspruch 7 oder Anspruch 8, wobei die Bohrung (32a) einen Durchmesser (d1) aufweist, der in der ersten Form 2-4 % kleiner als ein Außendurchmesser (d0) der Röhre (24) ist, auf die die Manschette montiert werden soll.

**10.** Verfahren gemäß einem der Ansprüche 7-9, wobei die Bohrung (32a) einen Durchmesser (d2) aufweist, der in der zweiten Form 1-6 % größer als ein Außendurchmesser (d0) der Röhre (24) ist, auf die die Manschette montiert werden soll.

**Revendications**

**1.** Un procédé de réalisation d'un ensemble de terminaison (22, 122) pour un ombilical (26), où un ou plusieurs tubes (24) s'étendent depuis l'ombilical (26), le procédé comprenant le fait d'insérer les un ou plusieurs tubes (24) s'étendant depuis l'ombilical (26) dans une chambre (20) à l'intérieur de l'ensemble de terminaison (22, 122) soit avant, soit après les étapes (a) à (c) ci-dessous, le procédé comprenant les étapes consistant :

(a) à fournir une pièce d'ancrage (32, 132, 133, 134) destinée à être montée sur l'un des tubes (24), la pièce d'ancrage (32, 132, 133, 134) comprenant un matériau à mémoire de conformation dans une deuxième phase et comprenant une ouverture qui est sous une deuxième conformation à travers laquelle le tube (24) peut passer,

(b) à faire glisser la pièce d'ancrage (32, 132, 133, 134) sur le tube (24) en faisant passer le tube (24) à travers l'ouverture,

(c) à laisser le matériau à mémoire de conformation subir un changement de phase dans lequel au moins une partie de la deuxième phase se convertit en une première phase de telle sorte que l'ouverture retourne vers une première conformation à travers laquelle le tube (24) ne peut pas passer, la pièce d'ancrage (32, 132, 133, 134) serrant de ce fait le tube (24), et

(d) à ajouter un matériau de remplissage à la chambre (20).

**2.** Un procédé tel que revendiqué dans la revendication 1 où le matériau à mémoire de conformation est un alliage à mémoire de conformation.

**3.** Un procédé tel que revendiqué dans la revendication 2 où l'étape (c) comprend le fait d'augmenter la température de la pièce d'ancrage (32, 132, 133, 134) au-dessus d'une température de transformation Af de telle sorte que l'alliage à mémoire de conformation subit un changement de phase dans lequel au moins une partie de la deuxième phase se convertit en la première phase et l'ouverture retourne vers sa première conformation, la pièce d'ancrage (32, 132, 133, 134) serrant de ce fait le tube (24).

**4.** Un procédé tel que revendiqué dans n'importe lesquelles des revendications 1 à 3, où l'étape (a) comprend :

(i) le fait de fournir une pièce d'ancrage (32, 132, 133, 134) destinée à être montée sur l'un des tubes (24), la pièce d'ancrage (32, 132, 133, 134) comprenant un matériau à mémoire de conformation dans la première phase et comprenant une ouverture ayant une première conformation à travers laquelle le tube (24) ne peut pas passer,

(ii) le fait d'apporter un stimulus sur la pièce d'ancrage (32, 132, 133, 134) de telle sorte que le matériau à mémoire de conformation subit un changement de phase dans lequel au moins une partie de la première phase se convertit en la deuxième phase, et

(iii) le fait de déformer l'ouverture en une deuxième conformation à travers laquelle le tube (24) peut passer.

**5.** Un procédé tel que revendiqué dans la revendication 4, où l'étape (ii) comprend le fait de refroidir la pièce d'ancrage (32, 132, 133, 134) au-dessous d'une température de transformation Mf de telle sorte que le matériau à mémoire de conformation subit un changement de phase dans lequel au moins une partie de la première phase se convertit en la deuxième phase.

**6.** Un procédé tel que revendiqué dans soit la revendication 4, soit la revendication 5, où à l'étape (i) la première conformation est d'une première taille qui est trop petite pour que le tube (24) puisse passer à travers, et l'étape (iii) comprend le fait d'élargir l'ouverture jusqu'à une deuxième taille qui est suffisamment grande pour que le tube (24) puisse passer à travers.

**7.** Un procédé tel que revendiqué dans n'importe laquelle des revendications 1 à 6, où la pièce d'ancrage (32, 132, 133, 134) est sous la forme d'un collier comprenant un tube généralement circulaire avec un alésage (32a) généralement circulaire central.

**8.** Un procédé tel que revendiqué dans la revendication 7, où sous la première conformation le diamètre interne du collier est de 10 mm à 45 mm et le collier comprend une paroi ayant une épaisseur de 0,5 mm à 2 mm.

**9.** Un procédé tel que revendiqué dans soit la revendication 7, soit la revendication 8, où l'alésage (32a) a un diamètre (d1) qui sous la première conformation est de 2 à 4 % inférieur à un diamètre externe (d0) du tube (24) sur lequel le collier doit être monté.

**10.** Un procédé tel que revendiqué dans n'importe laquelle des revendications 7 à 9, où l'alésage (32a) a un diamètre (d2) qui sous la deuxième conformation est de 1 à 6 % supérieur à un diamètre externe (d0) du tube (24) sur lequel le collier doit être monté.

Fig. 1

EP 3 555 511 B1

24

d0

24a

Fig. 2(a)

32

32a

d1

Fig. 2(b)

24a

d0

24

32

d1

32a

Fig. 2(c)

13

Fig. 3(a)

Fig. 3(b)

Fig. 3(c)

*Fig. 4*

Fig. 5a

Fig. 5b

*Fig. 6a*

EP 3 555 511 B1

*Fig. 6b*

*Fig. 6c*

EP 3 555 511 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008037962 A
- WO 2009007728 A